# EUROPÄISCHE PATENTANMELDUNG

(11) **EP 0 789 438 A2**
(43) Veröffentlichungstag der Anmeldung: **13.08.1997**
(21) Anmeldenummer: 97810061.8
(22) Anmeldetag: 04.02.1997
(51) Int. Cl.: H02G 5/06

(54) **Leitungsabschnitt einer gasisolierten Leitung**

(30) Priorität: 08.02.1996 DE 19604480
(71) Anmelder: ASEA BROWN BOVERI AG, 5400 Baden (CH)
(72) Erfinder: Moritz, Bertil, 72348 Västeras (SE)
(74) Vertreter: Kaiser, Helmut, Dr.

(57) **Zusammenfassung**

Der Leitungsabschnitt der gasisolierten Leitung (1) enthält einen im wesentlichen zylindersymmetrisch ausgebildeten, hochspannungsführenden Stromleiter (4) sowie ein isoliergasgefülltes Druckrohr (3) und Stützisolatoren (2). Die Stützisolatoren (2) weisen Isolierbeine (5, 8) auf, welche den Stromleiter (4) im Druckrohr (3) zentrisch halten. In die Mantelfläche des Stromleiters (4) sind axial geführte und hinterschnitten ausgebildete Nutkanäle (6) eingelassen. Diese Nutkanäle (6) dienen der Aufnahme eines Führungselementes (7) eines der Isolierbeine (5, 8). Eine solcher Leiterabschnitt kann durch Zusammenstecken der einzelnen Bestandteile in einfacher und kostengünstiger Weise hergestellt werden kann und zeichnet sich dennoch durch gute dielektrische und mechanische Eigenschaften aus.

## Beschreibung

### TECHNISCHES GEBIET

Bei der Erfindung wird ausgegangen von einem Leitungsabschnitt einer gasisolierten Leitung mit einem im wesentlichen zylindersymmetrisch ausgebildeten, hochspannungsführenden Stromleiter, einem isoliergasgefüllten Druckrohr und den Stromleiter im Druckrohr zentrisch haltenden Stützisolatoren, von denen mindestens einer mindestens drei entlang dem Umfang des Stromleiters gleichmässig verteilt angeordnete Isolierbeine aufweist.

### STAND DER TECHNIK

Ein Leitungsabschnitt der eingangs genannten Art ist beispielsweise in einem Aufsatz von A.Eidinger: Aufbau, Einsatz und Erprobung von SF₆-Rohrgaskabeln, Brown Boveri Mitt. 61 1976 (11) 688-694, beschrieben. Bei einer aus diesem Stand der Technik bekannten einphasig metallgekapselten Hochspannungsleitung ist ein in der isoliergasgefüllten Metallkapselung vorgesehener Stromleiter auf Dreibeinisolatoren abgestützt. Ein solcher Drei-beinisolator weist einen den Stromleiter haltenden metallenen Tragring sowie drei sternförmig am Tragring befestigte Isolierbeine auf, welche bei der Montage der Leitung gegen die Innenwand der Metallkapselung gepresst werden und dabei den Tragring und damit den Stromleiter zentrisch in der Metallkapselung festsetzen.

### KURZE DARSTELLUNG DER ERFINDUNG

Der Erfindung, wie sie in den Patentansprüchen 1 und 12 angegeben ist, liegt die Aufgabe zugrunde, einen Leitungsabschnitt der eingangs genannten Art zu schaffen, welcher in besonders einfacher und kostengünstiger Weise hergestellt und gewartet werden kann, und welcher sich zugleich durch gute dielektrische Eigenschaften auszeichnet.

Der Leitungsabschnitt nach der Erfindung ist in vorteilhafter Weise an eine Herstellung in einem vollautomatisierten Prozess angepasst, da die einzelnen Elemente, wie Stromleiter, Isolierbeine und Druckrohr in einem für eine Massenfertigung geeigneten Verfahren erzeugt und der Leitungsabschnitt im wesentlichen lediglich durch Zusammenstecken dieser Elemente erstellt wird. Diese Zusammenstecken ist dann besonders erleichtert, wenn in die Innenseite des Druckrohrs mindestens eines der mindestens drei Isolierbeine eingeformt ist.

Die in den Stromleitern vorgesehenen, axial ausgerichteten und hinterschnitten ausgebildeten Nutkanäle bewirken die Verlagerung des dielektrisch besonders gefährdeten Tripelpunktes (Punkt, welcher Stromleiter, Isolierbein und Isoliergas gemeinsam ist) ins dielektrisch abgeschirmte Innere des Stromleiters. Zugleich bewirken die Nutkanäle eine gute mechanische Führung und Lagerung der Isolierbeine. Darüber hinaus können die Nutkanäle einem weiteren Zweck dienen und mit Vorteil ein Kontaktelement eines zwei aufeinanderfolgender Abschnitte des Stromleiters elektrisch und mechanisch koppelnden Stromverbinders aufnehmen und sicher lagern.

### KURZE BESCHREIBUNG DER ZEICHNUNGEN

Bevorzugte Ausführungsbeispiele der Erfindung und die damit erzielbaren weiteren Vorteile werden nachfolgend anhand von Zeichnungen näher erläutert. Hierbei zeigt:
- Fig.1: eine Aufsicht auf einen radial geführten Schnitt durch eine erste Ausführungsform eines Leitungsabschnitts einer gasisolierten Leitung nach der Erfindung,
- Fig.2: eine Aufsicht in Pfeilrichtung auf einen längs II-II geführten Schnitt durch den Leitungsabschnitt nach Fig.1,
- Fig.3: eine Aufsicht auf einen radial geführten Schnitt durch eine zweite Ausführungsform des Leitungsabschnitts der gasisolierten Leitung nach der Erfindung, und
- Fig.4: eine Aufsicht auf einen radial geführten Schnitt durch eine dritte Ausführungsform des Leitungsabschnitts der gasisolierten Leitung nach der Erfindung.

### WEG ZUR AUSFÜHRUNG DER ERFINDUNG

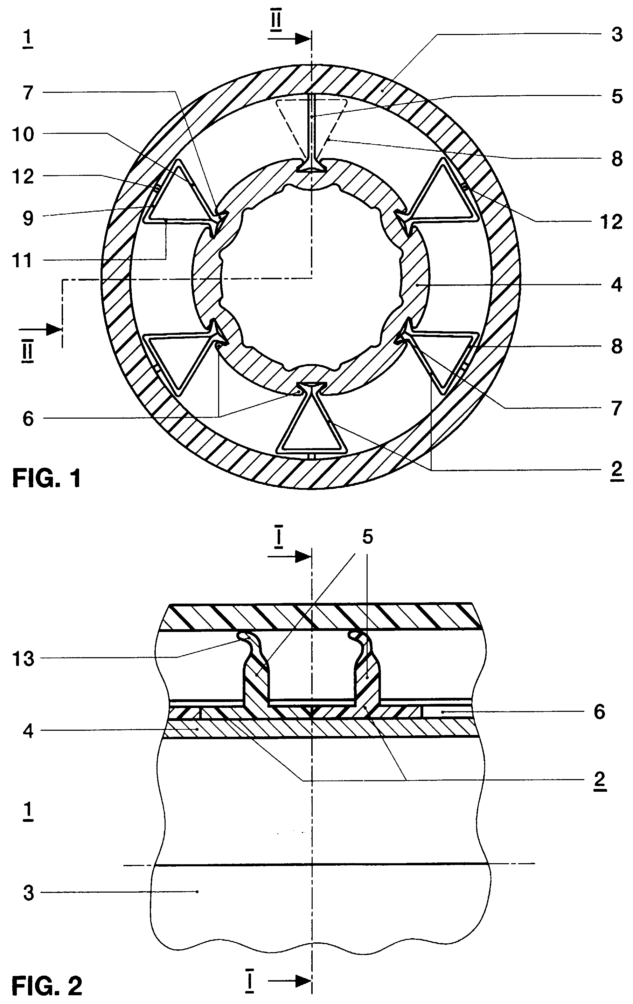

In allen Figuren beziehen sich gleiche Bezugszeichen auf gleichwirkende Teile. Ein in den Figuren 1 und 2 dargestellter Leitungsabschnitt einer gasisolierten Leitung 1 weist einen auf Stützisolatoren 2 in einem Druckrohr 3 zentral gelagerten Stromleiter 4 auf, welcher axialsymmetrisch und hohl ausgebildet ist und sich auf Hochspannungspotential befindet. Das Druckrohr 3 ist mit einem Isoliergas, wie etwa SF₆, von bis zu einigen bar Druck gefüllt und besteht aus einem leitfähig beschichteten Isolierstoff, wobei als Material für den Isolierstoff vorzugsweise ein gegebenenfalls füllstoffverstärktes -insbesondere faserverstärktes - Duromer, etwa ein Thermoplast, wie insbesondere ein Polyäthylen, oder ein Duromer, wie insbesondere ein Epoxid, verwendet wird.

In die Mantelfläche des Stromleiters 4 sind in Umfangsrichtung gleichmässig verteilt sechs axial geführte Nutkanäle 6 eingelassen. Diese Nutkanäle können beim Extrudieren des Stromleiters 4 ohne zusätzlichen Aufwand gefertigt werden. Die Nutkanäle 6 sind jeweils hinterschnitten ausgebildet. In der Hinterschneidung jedes Nutkanals 6 ist ein als Führungselement 7 dienendes, die Flanken des Nutkanals 6 hintergreifendes T-förmiges Profil eines von sechs gleichartigen Isolierbeinen 8 des Stützisolators 2 eingeschoben. Jedes der Isolierbeine 8 ist als gleichschenkeliges Dreieck ausgebildet und kann in besonders einfacher Weise durch Extrudieren oder Pressen eines Thermoplasten, wie etwa eines Polyäthylens, gefertigt werden. Das Isolierbein 8 weist jeweils eine auf die Innenfläche des Druckrohrs 3 wirkende Basis 9 und zwei an die Basis 9 angeformte und an der Dreieckspitze in das erste Führungselement 7 auslaufende Schenkel 10, 11 auf. Die Basis 9 ist in radialer Richtung flexibel ausgebildet und weist an der vom Stromleiter 4 abgewandten Seite in der Mitte einen auf der Innenfläche des Druckrohrs 3 gelagerten Ansatz 12 auf.

Bei der Montage des Leiterabschnitts wird der Stromleiter 4 in das Druckrohr 3 eingeführt und werden die Isolierbeine 8 mit ihren Führungselementen 7 in die Nutkanälen 6 eingeschoben. Hierbei stützt sich der Ansatz 12 auf der Innenseite des Druckrohrs 3 ab und drückt die Spitze des Dreiecks in radialer Richtung gegen den Boden des Nutkanals 6. Das Dreick kann sich dann beim Einschieben nicht verdrehen, so dass ein unerwünschtes Klemmen des Führungselementes 7 im Nutkanal 6 vermieden wird. Die beiden Schenkel 10, 11 stützen den Stromleiter 4 derart ab, dass auf die Schenkel wirkende grosse Biegekräfte vermieden werden. Dies ist ersichtlich dann der Fall, wenn das Dreieck spitzwinklig, insbesondere gleichseitig, ausgebildet ist.-Beim Auftreten von grossen Stromkräften stützt sich jedes der Dreiecke mit den zwei die Basis 9 begrenzenden Ecken auf der Innenfläche des Druckrohrs 3 ab. Dadurch wirkt die von den Dreiecken übertragene Kraft gleichmässiger auf das Druckrohr 3 und es wird so ein unerwünschtes lokales Ausbeulen des Druckrohrs 3 vermieden.

Ein zusätzlicher Vorteil der Abstützung des Stromleiters 4 mit als Dreieck ausgebildeten Isolierbeinen 8 besteht darin, dass das im Druckrohr 3 vorgesehene Isoliergas für Kühlzwecke oder zum Entfernen unerwünschter Feuchtigkeit aus dem Rohrinneren im gesamten Leiterabschnitt zirkulieren kann. Ferner wird so mit einer geringen Menge an Material für den Stützisolator 2 ein äusserst stabiler und zudem leicht zu fertigender Leiterabschnitt erstellt.

Mit einer minimalen Anzahl an drei Isolierbeinen 8 kann bereits eine für viele gasisolierte Leitungen ausreichende gute Halterung des Stromleiters 4 erreicht werden. Jedoch ist es im allgemeinen zweckmässig, sechs oder gegebenenfalls sogar noch mehr Isolierbeine 8 vorzusehen.

In Fig.1 ist eines der sechs Isolierbeine 8 nur gestrichelt dargestellt. Hierdurch ist angedeutet, dass anstelle der Isolierbeine 8 auch anders ausgebildete Isolierbeine 5 in die Nutkanäle 6 eingebracht sein können. In Fig.2 sind zwei solcher Isolierbeine 5 - in axialer Richtung - geschnitten dargestellt. Ersichtlich weisen diese Isolierbeine 5 ebenfalls als T-Profil ausgebildete Führungselemente 7 auf, sind aber im Unterschied zu den Isolierbeinen 8 nicht dreieck-, sondern stabförmig ausgebildet. Die Isolierbeine 5 weisen an ihren vom Stromleiter 4 abgewandten Enden jeweils einen flexiblen Abschnitt 13 aus einem Werkstoff mit guten Gleiteigenschaften, wie beispielsweise Polytetrafluoräthylen, auf. Dieser Abschnitt 13 ist nach der Montage des Leiterabschnitts unter Bildung von radialer Kraft auf der Innenfläche des Druckrohrs 3 abgestützt.

Die Isolierbeine 5 können mit Vorteil zunächst am Stromleiter 4 angebracht werden. Dies wird in einfacher Weise durch Einschieben der Führungselemente 7 in die Nutkanäle 6 erreicht. Hierbei ist es zweckmässig, eine axial wirkende Schubkraft in Stromleiternähe auf die Isolierbeine 5 wirken zu lassen, da so mit Sicherheit ein Verbiegen und damit ein Verklemmen der Isolierbeine 5 in den Nutkanälen vermieden wird. Danach kann die den Stromleiter 4 und die Isolierbeine 5 umfassende Anordnung in das Druckrohr 3 eingeschoben werden. Dies kann mit relativ geringem Kraftaufwand ausgeführt werden, da die flexiblen Abschnitte 13 aus einem Wekstoff mit guten Gleiteigenschaften bestehen. Beim Einschieben werden die flexiblen Abschnitte 13 durch Anpressen an die Innenseite des Druckrohrs 3 in axialer Richtung verbogen und verklemmen dann die Führungselemente 7 in den Nutkanälen 6, wodurch der Stromleiter 4 im Druckrohr 3 in radialer Richtung festgesetzt wird.

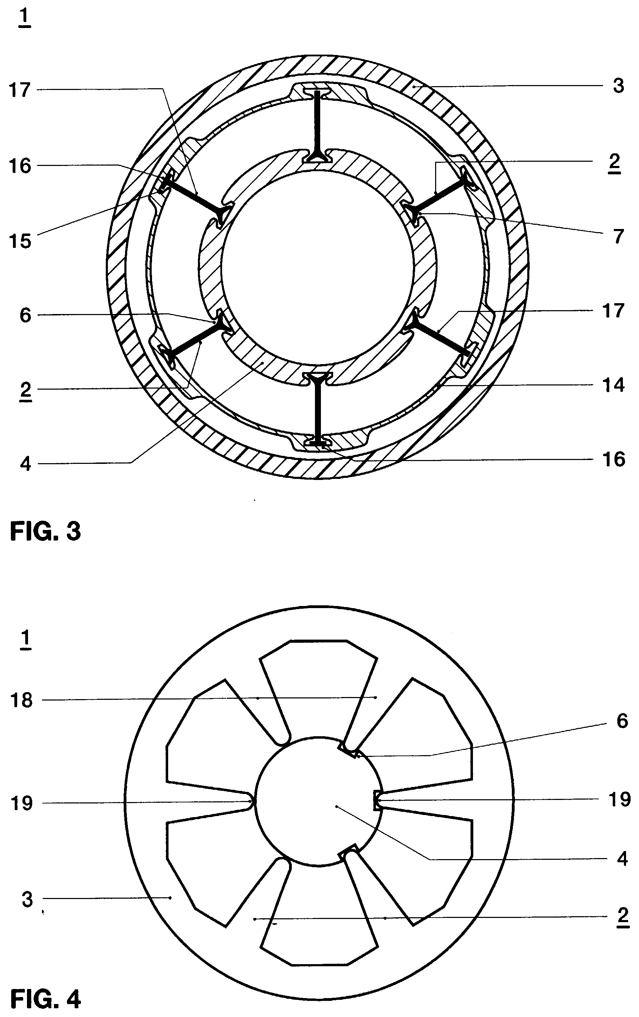

Bei der Ausführungsform des erfindungsgemässen Leiterabschnitts nach Fig.3 ist zwischen dem Druckrohr 3 und dem Stromleiter 4 in koaxialer Anordnung zusätzlich ein rohrförmiger Rückleiter 14 aus einem leitfähigen Material, etwa einer Legierung auf der Basis von Aluminium oder Kupfer, angeordnet ist. In die Innenfläche des Rückleiters 14 sind sechs axial erstreckte Nutkanäle 15 eingeformt, welche jeweils der Aufnahme eines Führungselementes 16 eines von sechs vorwiegend radial ausgerichten Isolierbeinen 17 dienen. Die in den Nutkanäle 6 befindlichen Führungselemente 7 sind jeweils als Y-Profil ausgebildet, wohingegen die in den Nutkanälen 15 befindlichen Führungselemente 16 zu Zwecken einer erleichterten Montage profilfrei ausgebildet sein können und dann überwiegend radial ausgerichtet sind.

Wie aus Fig.3 ersichtlich ist können die Führungselemente 7 aber auch als T- oder Y-Profil ausgebildet sein und hintergreifen dann bei hinterschnittener Ausbildung der Nutkanäle 15 die Flanken dieser Nutkanäle. Hierdurch wird die mechanische Festigkeit des Leitungsabschnitts der gasisolierte Leitung verbessert.

Da die isolierbeine 17 der Stütz isolatoren 2 mit ihren beiden Enden in den Nutkanälen 6 bzw. 15 gelagert sind, ist nicht nur die mechanische Stabilität der Anordnung gewährleistet, sondern ist zugleich dafür Sorge getragen, dass die Tripelpunkte sowohl am Stromleiter 4 als auch am rohrförmiger Rückleiter 14 dielektrisch abgeschirmt sind. Eine besonders sichere Abschirmung ist dann gewährleistet, wenn - wie aus Fig.3 ersichtlich ist - die axial ausgericheten Kanten der Nutkanäle 6 bzw. 15 gerundet ausgeführt sind. Die Tripelpunkte liegen dann mit Sicherheit im (dielektrisch abgeschirmten) Inneren der Nutkanäle 6 bzw. 15.

Der rohrförmiger Rückleiter 14 dient nicht der Aufnahme des Drucks des Isoliergases sondern lediglich der Führung von Rückstrom und der Halterung der Isolierbeine 17 der Stützisolatoren 2. Er kann daher dünn ausgeführt werden.

Bei der Ausführungsform des erfindungsgemässen Leiterabschnitts gemäss Fig.4 sind in das Druckrohr 3 Isolierbeine 18 direkt eingeformt. Diese Einformung kann bei der Herstellung des Druckrohrs 3 in einem Extrudierverfahren ausgeführt werden. Die Isolierbeine 18 können - wie in der linken Hälfte von Fig. 4 dargestellt ist - jeweils einen gerundet ausgebildeten Endabschnitt 19 aufweisen, welcher auf der Mantelfläche des Stromleiters 4 abgestützt ist. Durch die gerundete Ausbildung wird erreicht, dass sich der Tripelpunkt in einem Raum mit einem relativ schwachen elektrischen Feld befindet. Im Stromleiter 4 angeordnete Nutkanäle 6 können dann entfallen. Weisen die Isolierbeine 8 relativ spitz ausgeführte Endabschnitte 19 auf-wie dies aus der rechten Hälfte von Fig.4 ersichtlich ist - so sollten die Endabschnitte 19 in die Nutkanäle 6 geführt sein. Die Tripelpunkte sind dann dielektrisch abgeschirmt.

### Bezugszeichenliste

- 1: gasisolierte Leitung
- 2: Stützisolatoren
- 3: Druckrohr
- 4: Stromleiter
- 5: Isolierbeine
- 6: Nutkanäle
- 7: Führungselemente
- 8: Isolierbeine
- 9: Basis
- 10, 11: Schenkel
- 12: Ansatz
- 13: flexible Abschnitte
- 14: rohrförmiger Rückleiter
- 15: Nutkanäle
- 16: Führungselemente
- 17, 18: Isolierbeine
- 19: Endabschnitte

## Patentansprüche

1. Leitungsabschnitt einer gasisolierten Leitung (1) mit einem im wesentlichen zylindersymmetrisch ausgebildeten, hochspannungsführenden Stromleiter (4), einem isoliergasgefüllten Druckrohr (3) und den Stromleiter (4) im Druckrohr (3) zentrisch haltenden Stützisolatoren (2), von denen mindestens einer mindestens drei entlang dem Umfang des Stromleiters (4) gleichmässig verteilt angeordnete Isolierbeine (5, 8, 17, 18) aufweist, dadurch gekennzeichnet, dass in die Mantelfläche des Stromleiters (4) mindestens ein axial geführter, hinterschnitten ausgebildeter und der Aufnahme eines ersten Führungselementes (7) eines der mindestens drei Isolierbeine (5, 8, 17) dienender Nutkanal (6) eingelassen ist, und dass in der Hinterschneidung des mindestens einen Nutkanals (6) als erstes Führungselement (7) ein die Flanken des Nutkanals (6) hintergreifendes Profil des Isolierbeins (5, 8, 17) eingeschoben ist.

2. Leitungsabschnitt nach Anspruch 1, dadurch gekennzeichnet, dass das Profil T- oder Y-förmig ausgebildet ist.

3. Leitungsabschnitt nach Anspruch 2, dadurch gekennzeichnet, dass mindestens eines der Isolierbeine (5, 8, 17) an seinem vom Stromleiter (4) abgewandten Ende flexibel ausgebildet ist, und dass dieses Ende unter Bildung von radialer Kraft auf der Innenfläche des Druckrohrs (3) abgestützt ist.

4. Leitungsabschnitt nach Anspruch 3, dadurch gekennzeichnet, dass das mindestens eine Isolierbein (5) stabförmig ausgebildet ist (Figuren 1, 2).

5. Leitungsabschnitt nach Anspruch 1 oder 2, dadurch gekennzeichnet, dass das mindestens eine Isolierbein (8) als gleichschenkliges Dreieck ausgebildet ist mit einer auf die Innenfläche des Druckrohrs (3) wirkenden Basis (9) und mit zwei an die Basis (9) angeformten und an der Dreieckspitze in das erste Führungselement (7) auslaufenden Schenkeln (10, 11) (Fig.1).

6. Leitungsabschnitt nach Anspruch 5, dadurch gekennzeichnet, dass die Basis (9) in radialer Richtung flexibel ausgebildet ist und an der vom Stromleiter (4) abgewandten Seite in der Mitte einen auf der Innenfläche des Druckrohrs (3) unter Bildung von radialer Kraft gelagerten Ansatz (12) aufweist.

7. Leitungsabschnitt nach Anspruch 6, dadurch gekennzeichnet, dass das gleichschenklige Dreieck spitzwinklig ausgebildet ist.

8. Leitungsabschnitt nach Anspruch 1, dadurch gekennzeichnet, dass zwischen dem Druckrohr (3) und dem Stromleiter (4) in koaxialer Anordnung ein rohrförmiger Rückleiter (14) angeordnet ist, dass in die Innenfläche des Rückleiters (14) mindestens ein axial erstreckter Nutkanal (15) eingeformt ist, welcher der Aufnahme eines zweiten Führungselements (16) des Isolierbeins (17) dient (Fig.3).

9. Leitungsabschnitt nach Anspruch 8, dadurch gekennzeichnet, dass das Isolierbein (17) vorwiegend radial ausgerichtet ist.

10. Leitungsabschnitt nach Anspruch 9, dadurch gekennzeichnet, dass das zweite Führungselement (16) in dem im Rückleiter (14) vorgesehenen Nutkanal (15) überwiegend radial ausgerichtet ist.

11. Leitungsabschnitt nach Anspruch 9, dadurch gekennzeichnet, dass der im Rückleiter (14) vorgesehene Nutkanal (15) hinterschnitten ausgebildet ist, und dass in die Hinterschneidung dieses Nutkanals (15) als zweites Führungselement (16) ein die Flanken des Nutkanals (15) hintergreifendes Profil des Isolierbeins (17) eingeschoben ist.

12. Leitungsabschnitt einer gasisolierten Leitung (1) mit einem im wesentlichen zylindersymmetrisch ausgebildeten, hochspannungsführenden Stromleiter (4), einem isoliergasgefüllten Druckrohr (3) und den Stromleiter (4) im Druckrohr (3) zentrisch haltenden Stützisolatoren (2), von denen mindestens einer mindestens drei entlang dem Umfang des Stromleiters (4) gleichmässig verteilt angeordnete Isolierbeine (18) aufweist, dadurch gekennzeichnet, dass in die Innenseite des Druckrohrs (3) mindestens eines der mindestens drei Isolierbeine (18) eingeformt ist (Fig.4).

13. Leitungsabschnitt nach Anspruch 12, dadurch gekennzeichnet, dass das mindestens eine Isolierbein (18) einen gerundet ausgebildeten Endabschnitt (19) aufweist, welcher auf der Mantelfläche des Stromleiters (4) abgestützt ist.

14. Leitungsabschnitt nach Anspruch 12 oder 13, dadurch gekennzeichnet, dass der Stromleiter (4) mindestens einen axial geführten Nutkanal (6) aufweist, in dem ein Endabschnitt eines weiteren Isolierbeins (18) der mindestens drei in die Innenseite des Druckrohrs (3) eingeformten Isolierbeine (18) geführt ist.
